# EUROPÄISCHE PATENTSCHRIFT

(11) **EP 3 037 203 B1**
(45) Veröffentlichungstag und Bekanntmachung des Hinweises auf die Patenterteilung: **15.12.2021**
(21) Anmeldenummer: 15003652.3
(22) Anmeldetag: 22.12.2015
(51) Int. Cl.: B23P 15/40, B23K 26/211, B23K 26/26, B23K 26/0622, B23K 1/005, B23K 1/00, B23K 35/02, B26D 1/00, B23K 101/18, B23K 103/04, B23K 37/04

(54) **VERFAHREN ZUR HERSTELLUNG VON STAHLBLECHEN FÜR STANZBLECHE**
METHOD FOR PRODUCTION OF STEEL SHEETS FOR STAMPING PLATES
PROCEDE DE FABRICATION DE TOLES EN ACIER POUR TOLES A ESTAMPER

(30) Priorität: 23.12.2014 DE 102014119581
(43) Veröffentlichungstag der Anmeldung: 29.06.2016
(73) Patentinhaber: WINK Stanzwerkzeuge GmbH & Co. KG, 49828 Neuenhaus (DE)
(72) Erfinder: DE NATRIS, Albertus, 48531 Nordhorn (DE)
(74) Vertreter: Busse & Busse

(56) Entgegenhaltungen:
- WO-A2-2014/020420
- DE-A1- 19 524 235
- DE-B3- 10 351 779
- US-A1- 2008 128 053
- US-A1- 2009 013 830
- US-A1- 2010 045 066
- US-A1- 2013 082 033

## Beschreibung

Die vorliegende Erfindung betrifft Stanzbleche, welche Stanzlinien insbesondere zum Stanzen von Etiketten aufweisen, sowie ein Verfahren zur Herstellung von Stahlblechen für solche Stanzbleche.

Die US 2009/0130 830 A1, die als nächstliegender Stand der Technik angesehen wird, offenbart ein Stanzblech zur Anwendung auf Rotationsstanzzylindern. Die Stanzlinien dienen zum Schneiden von Materialbahnen, auf denen der Rotationsstanzzylinder im Betrieb abrollt.

Für Stanzbleche werden üblicherweise legierte Stahlbleche benutzt, die flexibel genug sein müssen, um auf den Zylindern von häufig eingesetzten Rotations-stanzmaschinen auf- und festgelegt zu werden. Andererseits müssen Stanzbleche beispielsweise zum Ausstanzen von Etiketten ausreichend hart sein, damit das Blech lange hält. Als Stanzblech-Materialen geeigneter Güte werden beispielsweise C60-Stähle verwendet, die als Rollenware in einer typischen Breite von beispiels-weise 60 cm eingekauft oder von den Stahlherstellern direkt vom Coil abgelängt werden und an den Stanzblechhersteller geliefert werden. Darüber hinaus gehende Bandstahlbreiten für Stanzbleche werden zunehmend seltener. So gibt es derzeit keinen Hersteller mehr, der für die kommenden zwei Jahre Bandstähle in der für Stanzbleche gewünschten Qualität und einer Breite von über einem Meter, insbesondere von 1,20 m, in der notwendigen Qualität anbieten kann.

Es ist Aufgabe der vorliegenden Erfindung, ein Verfahren zur Herstellung von für Stanzbleche sinnvoll verwendbaren Stahlblechen geeigneter Güte bereit zu stellen, bei dem die Stahlbleche eine Breite von zumindest 70 cm, vorzugsweise von mindestens 1,00 m und besonders bevorzugt von 1,20 m aufweisen.

Die Aufgabe wird gelöst durch ein Verfahren gemäß Anspruch 1. Vorteilhafte Ausgestaltungen des Verfahrens sind den auf Anspruch 1 rückbezogenen Unteransprüchen sowie der nachfolgenden Beschreibung zu entnehmen.

Erfindungsgemäß ist vorgesehen, dass zur Herstellung eines Stahlbleches einer ausreichenden Qualität für Stanzbleche zumindest zwei über einen Spalt beanstandete Ausgangsbleche der notwendigen Qualität nebeneinander positioniert werden. Die Ausgangsbleche werden hierbei vorzugsweise auf einem Arbeitstisch positioniert. Die Ausgangsbleche können beispielsweise über einen Magnettisch oder über ein Unterdrucksystem des Arbeitstisches gehalten werden.

Es wird ein Schweißdraht vorteilhafterweise in Längsrichtung des Spalts und vorzugsweise zumindest teilweise innerhalb des Spalts und insbesondere in Kontakt mit zumindest einem der Ausgangsbleche, vorzugsweise beiden, am Spalt positioniert. Alternativ wird der Schweißdraht über eine automatische Zuführeinrichtung (nachfolgend auch als Drahtzufuhr bezeichnet) an der zu verschweißenden Stelle positioniert und bedarfsgerecht zugeführt, wobei der Draht ebenfalls zumindest teilweise in Kontakt mit den Ausgangsblechen und zumindest teilweise innerhalb des Spalts angeordnet sein kann. Die Positionierung erfolgt dergestalt, dass der Schweißdraht über die Schweißvorrichtung so aufgeschmolzen werden kann, dass er bzw. die entstehende Schmelze in Kontakt mit beiden Ausgangs-blechen mit diesen eine Verbindung eingeht.

Die Beabstandung der Ausgangsbleche erfolgt vor dem Hintergrund der Vermeidung einer durch während des Verschweißens oder auch danach erfolgenden nachtei-ligen Beeinflussung der Schweißnaht durch Verformungen, d.h. Änderungen der Abmessungen der Ausgangsbleche. Etwaige Änderungen der Abmessungen der Ausgangsbleche aufgrund von Dehnungen werden aufgefangen.

Erfindungsgemäß werden die beiden Ausgangsbleche mittels des Schweißdrahtes und einer insbesondere oberhalb einer ersten, oberen Seite der Ausgangsbleche angeordneten Schweißvorrichtung verschweißt. Anschließend werden die nunmehr miteinander verbundenen Ausgangsbleche vorteilhafterweise umgedreht, so dass die vorher zu einem Arbeitstisch weisenden, unteren Seiten der Ausgangsbleche nunmehr oben liegen. Es wird oder ist mindestens ein weiterer Schweißdraht in Längsrichtung des Spalts angeordnet oder per automatischer Drahtzufuhr zugeführt. Vorzugsweise ist dieser mindestens eine weitere Schweißdraht ebenfalls wiederum zumindest teilweise innerhalb des Spalts sowie insbesondere in Kontakt mit beiden Ausgangsblechen positioniert. Mittels dieses weiteren mindestens einen Schweißdrahts werden die Ausgangsbleche ebenfalls miteinander verschweißt.

Darüber hinaus wird die Schweißnaht bzw. zumindest eine der Schweißraupen des nunmehr entstandenen Stahlblechs an benachbarte Oberflächen angepasst dergestalt, dass das Stahlblech hinterher eine einheitliche Dicke aufweist. Vorzugsweise werden beide auf den voneinander weg gerichteten Seiten der Ausgangsbleche bzw. des Stahlblechs entstandene Schweißraupen angeglichen. Durch ein solches Stahlblech konnten Stanzbleche hergestellt werden, die ungeachtet der Schwierigkeiten des Verbindens von z.B. C60-Blechen den vorbezeichneten Anforderungen an einerseits Standfestigkeit und andererseits Flexibilität gerecht werden. Insbesondere bei Stanzblechen einer Ausgangsdicke vor der Bearbeitung und Herstellung der Stanzlinien von maximal 1,5 mm, die mit herkömmlichen Schweißmethoden bei C45, C60 und C75 Stählen nicht langfristig miteinander verbunden werden konnten, hat die Verwendung zumindest zweier Schweißraupen zur Ausbildung einer Schweißnaht zu dem gewünschten Ergebnis geführt. Hierbei liegt die Härte (Shore-Härte C) der Schweißnaht insbesondere in einem gewünschten Bereich unterhalb von 55 (45-50).

Vorzugsweise erfolgt die Angleichung der zumindest einen Schweißraupe an die Oberfläche dergestalt unmittelbar nach dem Verschweißen, dass die Schweißraupe(n) eine Temperatur oberhalb der Umgebungstemperatur aufweisen. Somit wird sinnvollerweise eine erste Schweißraupe vor Umdrehen der miteinander verbundenen Ausgangsbleche und eine zweite Schweißraupe nach Umdrehen der miteinander verbundenen Bleche angepasst, d.h. insbesondere glatt gefräst oder glatt geschliffen. Alternativ kann die Schweißnaht vor einer Angleichung der Oberfläche erst abgekühlt werden.

Vorteilhafterweise weist die Schweißvorrichtung, die insbesondere als Laserschweißvorrichtung ausgebildet ist, gleichzeitig auch einen Fräs- oder Schweißkopf auf, mit dem dann über denselben Antrieb (Relativbewegung des Schweißkopfes zu den Ausgangsblechen) sowohl verschweißt als auch die Materialstärke angepasst wird.

Die Schweißnaht ergibt sich somit aus der Bildung und Bearbeitung mindestens zweier Schweißraupen, wobei diese nacheinander oder gleichzeitig sowohl mit als auch ohne Umdrehen und von beiden oder nur von einer Seite der Ausgangsbleche erzeugt werden können. Als Schweißraupen werden somit unabhängig von deren Form mit oder ohne Erhebungen die sich durch das Verschweißen eines einzelnen Drahtes mit den Ausgangsblechen ergebenden Verbindungsbereiche bezeichnet, während der letztendlich fertige, gesamte Verbindungsbereich des fertigen Stahlblechs als Schweißnaht definiert ist.

Um einer Spaltmaßänderung durch den Schweißvorgang entgegenzuwirken, was zu Ungleichmäßigkeiten der Schweißnaht führen kann, können die Ausgangsbleche mittels der Schweißvorrichtung des Schweißdrahts vorab über eine Mehrzahl voneinander beabstandeter Schweißstellen miteinander verbunden werden. Die Schweißstellen, die beispielsweise ca. 1 cm - 3 cm voneinander beabstandet sind, können als Punktschweißstellen oder auch als eher länglich ausgebildete Schweißnähte bzw. -raupen geringer Länge von beispielsweise 0,2 cm ausgebildet sein.

Zur Herstellung der Schweißraupen und/oder zur Vorab-Verbindung der Ausgangsbleche mit dem Ziel der Lagefixierung kann wie auch sonst der Schweißdraht ebenfalls automatisiert zugeführt werden.

Eine höhere Qualität der Verbindungsnaht wird dann erreicht, wenn nach der Herstellung jeder Schweißraupe außer der abschließenden letzten Schweißraupe deren innerhalb des Spaltes liegende Schweißraupenoberfläche vorbehandelt wird, was insbesondere zu einer Vergleichmäßigung der Oberfläche führen kann. Vorzugsweise wird die Schweißraupenoberfläche erhitzt, insbesondere über die Schweißvorrichtung als solche, so dass innerhalb des Spalts vorzugsweise in etwa auf halber Höhe des herzustellenden Stahlbleches, durch Anschmelzen der Schweißraupe und ggf. der Ausgangsbleche eine verbesserte Verbindung zwischen den Ausgangsblechen hergestellt wird.

Erfindungsgemäß ist die Schweißvorrichtung insbesondere als Laserschweiß-vorrichtung ausgebildet und weist somit einen Laser auf, der insbesondere gepulst betreibbar ist. Dieser Laser kann sowohl zur Herstellung der Schweißraupen als auch zur Vorbehandlung der Schweißraupenoberfläche innerhalb des Spaltes dienen. Die Schweißraupe kann über einen gepulsten Laserstrahl hergestellt werden, der vorzugsweise mit einer Frequenz zwischen 1 Hz und 20 Hz insbesondere zwischen 3 Hz und 7 Hz betrieben wird. Die Pulsfrequenz kann in Abhängigkeit der Relativgeschwindigkeit von Schweißkopf bzw. Laserkopf zu den Ausgangsblechen eingestellt und in Abhängigkeit der Relativbewegung geregelt oder gesteuert werden. Ziel ist es, eine gleichmäßige Schweißraupe und letztlich eine Schweißnaht herzustellen, bei der eine Vielzahl von Schweißpunkten nebeneinander gesetzt werden, so dass der Energieeintrag an einer Stelle des Schweißdrahts angepasst ist und der Laserstrahl an dieser Stelle nicht zu viel Energie einträgt.

Die Vorschubgeschwindigkeit zwischen 0,1 und 6 mm/s, vorzugsweise zwischen 0,5 und 2 mm/s.

Insbesondere weist der Laserstrahl in dem Bereich, in dem er auf einen der Schweißdrähte trifft, einen Durchmesser auf, der maximal 0,5 mm kleiner ist als die Breite des Schweißdrahts. Beispielhaft kann der Laserstrahl in dem Bereich, in dem er auf den Schweißdraht trifft eine relativ geringe Breite von rund 0,1 mm aufweisen, wobei der Schweißdraht einen Durchmesser von 0,5 mm aufweist und der Spalt eine mittlere Breite über die Länge betrachtet von 0,3 mm besitzt. Da unterhalb des Schweiß-drahts zunächst ein Spalt ist, sollte die Energie des Strahls auf die Dicke des Schweißdrahts und dessen Material abgestimmt werden.

Vorzugsweise weist der Laserstrahl in dem Bereich, in dem er auf einen der Schweißdrähte trifft einen Durchmesser größer als die Breite des Schweißdrahtes auf, wobei der Schweißdraht einen Durchmesser von 0,5 mm aufweisen kann und dann der Spalt eine mittlere Breite über die Länge betrachtet von 0,3 mm besitzt. Der Laserfokus weist hierbei insbesondere einen Durchmesser im Bereich von 0,5 mm bis 1,2 mm auf. Der Laserstrahl schmilzt dabei das Material sowohl des Schweißdrahtes als auch Material an den jeweils am Spalt anliegenden Kanten der beiden Stahlbleche auf, so dass sich nach dem Abkühlen eine feste Verbindung zwischen dem Schweißdraht und den beiden Stahlblechen ergibt.

Vorzugsweise ist der Durchmesser zumindest einer der Schweißdrähte allgemein etwas größer als die Breite des Spalts und insbesondere nicht mehr als 1 mm größer, vorzugsweise nicht mehr als 0,3 mm größer. Dies vereinfacht einerseits die Positionierung des Schweißdrahts, da dieser mit seinem oftmals runden Querschnitt nicht in den Spalt fällt, andererseits ergibt sich dies bei üblichen Stanzblechdicken aus der Berechnung des für die Schweißnaht benötigten Volumens. Schließlich ist hierbei das System hinsichtlich der Laserstrahlbreite im Auftreffbereich, der Energieübertragung auf den Draht und in die angrenzenden Aufgangsbleche gut ausbalanciert.

Die Pulsenergie eines einzelnen Laserpulses liegt dabei in einem Bereich zwischen 0,5 und 40 Joule, vorzugsweise in einem Bereich zwischen 5 und 15 Joule. Dieser Bereich deckt die bei den verwendeten Materialien, Geschwindigkeiten und Frequenzen gewünschte Energie für ein optimales Schweißergebnis ab.

Der Spalt zwischen den Ausgangsblechen weist eine Breite von nicht mehr als 2 mm auf, vorzugsweise liegt die Breite unterhalb von 0,5 mm, wobei es sich hierbei um eine mittlere Breite über die Länge des Spalts in Längsrichtung betrachtet gemittelt handelt. Schweißnähte dieser Breite können mit dem erfindungsgemäßen Verfahren prozesssicher hergestellt werden.

Eine noch höhere Prozesssicherheit wird erreicht, wenn sich der Spalt oberhalb eines Kühlkanals eines Arbeitstisches befindet und hierdurch die Temperatur im Bereich der Schweißraupe besser kontrollierbar ist.

Vorteilhafterweise werden bei den verwendeten Materialien (C45 - C75 Stähle, insbesondere C60-Stahl) durch den gepulsten Laserstrahl zur Ausbildung einer kontinuierlichen Schweißnaht Schweißpunkte gebildet, deren Mitten rund 0,5 mm +- 0,2 mm voneinander entfernt sind und die ineinander übergehen. Dies gilt für alle Schweißraupen, die mittels des Schweißdrahtes erzeugt werden und kann auch für die Nachbehandlung der Schweißraupenoberfläche der Schweißraupen innerhalb des Spalts gelten.

Vorteilhafterweise werden zur Fixierung und Kühlung der Ausgangsbleche diese über eine Haltevorrichtung fixiert. Hierbei können die Ausgangsbleche gegeneinander und/oder gegenüber einem Arbeitstisch fixiert werden. Die Haltevorrichtung umfasst hierfür insbesondere aus Aluminium, Kupfer oder einem anderen gut wärmeleitenden Material hergestellte Abdeckbleche, die die Ausgangsbleche dicht am Spalt, d.h. in einem Abstand von beispielsweise maximal 1 cm, abdecken und die beispielsweise mit den Ausgangsblechen gemeinsam an einem Arbeitstisch fixiert, insbesondere verspannt oder -klemmt sind.

Eine alternative vorteilhafte Fixierung der Ausgangsbleche erfolgt durch einen Magnettisch. Durch die Magnetfelder wird so neben den Ausgangsblechen zugleich auch der auf den Spalt aufgelegt Schweißdraht fixiert. Insbesondere in den Randbereichen der Magnete kann eine zusätzliche Fixierung des Schweißdrahtes über einen Niederhalter direkt in Schweißrichtung vor der Schweißstelle vorteilhaft sein.

Neben dem Verfahren wird ein Stanzblech einer Breite von zumindest 70 cm und einer Länge von zumindest 30 cm offenbart, welches auf Basis zumindest zweier miteinander verschweißter Ausgangsbleche aus Stahl, insbesondere aus C60-Stahl, ausgebildet ist. Vorzugsweise handelt es sich hierbei um ein Stanzblech, welches eine für die Verwendung auf Rotationsstanzzylindern ausreichende Flexibilität besitzt.

Insbesondere wird ein Stanzblech durch ein vor- und/oder nachbeschriebenes Verfahren hergestellt und anschließend zur Ausbildung der Stanzlinien insbesondere geätzt und/oder graviert.

Alternativ kann unmittelbar ein Stanzblech einer Breite von zumindest 70 cm und einer Länge von zumindest 30 cm durch das Verschweißen zumindest zweier Stahlbleche, auf denen insbesondere durch Ätzen und/oder Gravieren bereits Stanzlinien ausgebildet sind, mit einem vor- und/oder nachbeschriebenen Verfahren erstellt werden. Die Abfolge der Verfahrensschritte entspricht bis auf die Tatsache, dass statt der Stahlbleche ohne Stanzlinien fertige belichtete, geätzte und/oder gravierte Stahlbleche verwendet werden, dem erfindungsgemäßen Verfahren.

Der geringe Verzug und der damit einhergehende geringe Nacharbeitungsaufwand der sich aus der Anwendung des Schweißverfahren ergeben, ermöglichen die Verarbeitung von mit Stanzlinien versehenen Stahlblechen. Die Stahlbleche können dadurch auf kleineren Anlagen zum Ätzen oder Gravieren und damit flexibler mit Stanzlinien versehen werden, bevor die vorgefertigten Bleche zum fertigen Stanzblech zusammengefügt werden.

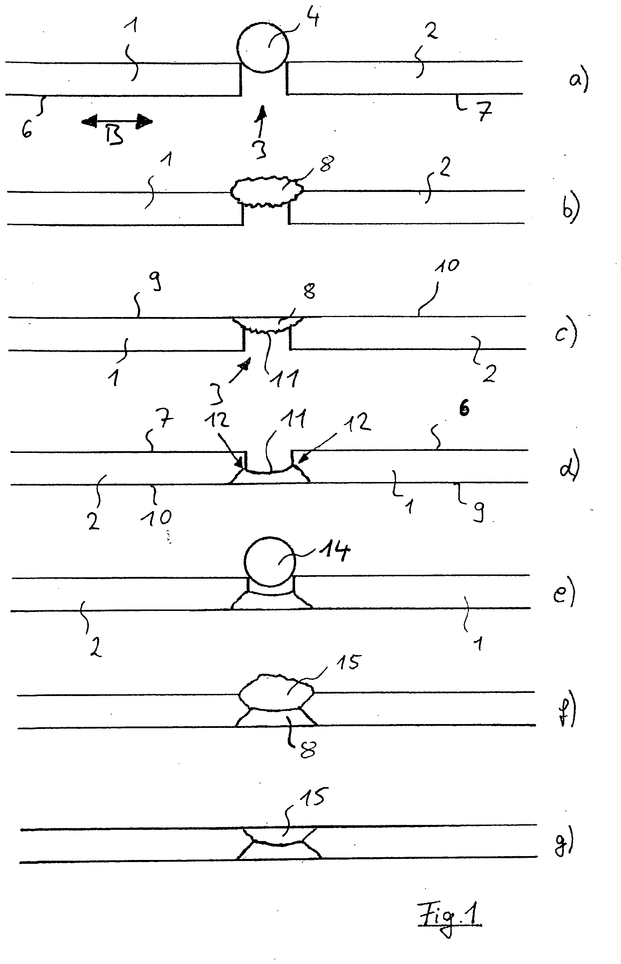

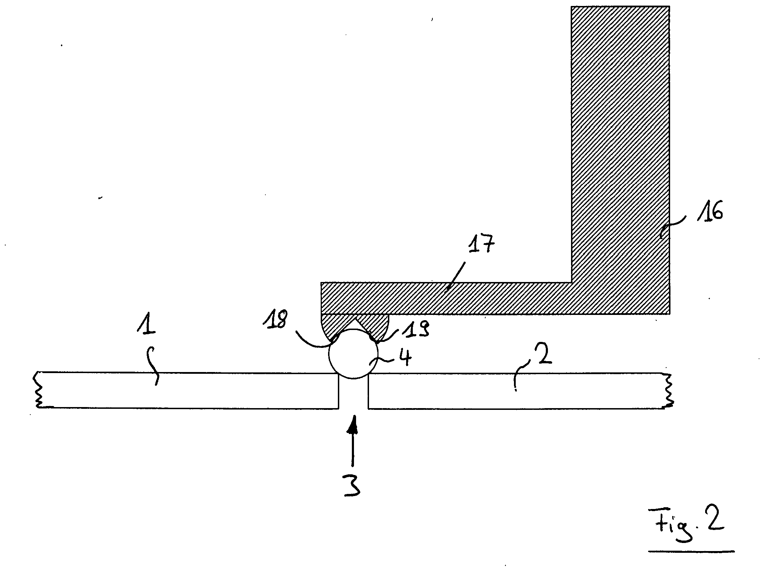

Weitere Vorteile und Einzelheiten der Erfindung sind der nachfolgenden Figurenbeschreibung zu entnehmen. In den Figuren 1 a) - 1 g) sind schematisch die einzelnen Zustände während der Ausführung des Herstellungsverfahrens dargestellt. In Figur 2 ist der Niederhalter dargestellt.

Einzelne technische Merkmale des nachbeschriebenen Ausführungsbeispiels können auch in Kombination mit vorbeschriebenen Ausführungsbeispielen sowie den Merkmalen etwaiger weiterer Ansprüche zu erfindungsgemäßen Gegenständen kombiniert werden.

Sofern sinnvoll, werden funktional gleichwirkende Elemente mit identischen Bezugsziffern versehen.

Gemäß Fig. 1 a) werden zwei Ausgangsbleche 1, 2 einer Breite von beispielsweise 60 cm in Richtung B betrachtet. In Längsrichtung (senkrecht in die Figurenebene hinein bzw. aus dieser heraus) werden die Ausgangsbleche von einer Rolle in der gewünschten Länge abgerollt, geschnitten bzw. als von der Rolle abgelängten Blechtafeln angeliefert sowie anschließend über einen Spalt 3 voneinander beabstandet nebeneinander positioniert. Ein Schweißdraht 4 ist breiter als der Spalt 3 und wird von oben auf den Spalt gelegt. Mit den Unterseiten 6 und 7 liegen die Ausgangsbleche 1 und 2 auf einem nicht dargestellten Arbeitstisch und sind beispielsweise magnet- oder vakuumfixiert.

Der Schweißdraht 4 wird anschließend in Längsrichtung, d.h. wie vorbeschrieben aus der Figurenebene heraus bzw. in diese hinein über eine Mehrzahl von Schweißstellen an den Ausgangsblechen 1 und 2 befestigt. Alternativ werden bei einer automatisierten Drahtzuführeinrichtung an ca. 1 cm voneinander beabstandeten Stellen Schweißpunkte zur Vorab-Fixierung der Ausgangsbleche 1, 2 gesetzt. Hierdurch kann einer durch die Herstellung der Schweißnaht oder der -raupen einhergehende Änderung des Spaltmaßes entgegengewirkt werden. Weiterhin alternativ kann von der Fixierung durch Schweißpunkte bei einer ausreichend großen insbesondere magnetischen Haltekraft durch den Arbeitstisch abgesehen werden.

Über einen gepulsten Laser einer Frequenz von 5 Hz wird anschließend der Schweißdraht 4 mit den Ausgangsblechen 1 und 2 verschmolzen, so dass sich eine Schweißraupen 8 ergibt, die auch vorherige Teile der Ausgangsbleche 1 und 2 mit umfasst.

Anschließend wird der Ausgangsbereich hinsichtlich seiner Oberfläche an die Oberseiten 9 und 10 der Ausgangsbleche 1 und 2 angepasst (Fig. 1 c)). Dies erfolgt vorzugsweise durch Fräsen und/oder Schleifen.

Anschließend werden die Ausgangsbleche gedreht, so dass nun die vorherigen Unterseiten 7 und 8 oben liegen und entsprechend die Seiten 10 und 9 zum Arbeitstisch hin gerichtet sind. Nun wird die innerhalb des Spaltes 3 befindliche Oberfläche 11 der Schweißraupe 8 nach- bzw. vorbehandelt, so dass insbesondere eine Vergleichmäßigung eine Oberfläche 11 ergibt. Diese ist anschließend glatter ausgebildet. Darüber hinaus ist in Übergangsbereichen 12 durch die Vor- bzw. Nachbehandlung mittels ebenfalls wieder eines Laserstrahls ein gleichmäßigerer Übergang der Schweißraupe in den Stahl der Ausgangsbleche 1 und 2 gewährleistet (Fig. 1 d)), da auch angrenzende Bereiche der Ausgangsbleche wieder mit angeschmolzen werden könnten. Hierbei kann beispielsweise auch Schlacke auf der Oberseite der Schweißraupe entfernt werden.

Anschließend wird wiederum ein weiterer Schweißdraht 14 oder Schweißdrahtabschnitt, der ebenfalls breiter ist als der Spalt 3 in Kontakt mit den Ecken der Ausgangsbleche 1 und 2 entlang des Spalts und teilweise in diesem positioniert. Es kann eine Befestigung des Drahtes 14 mit den Ausgangsblechen 1, 2 mit einzelnen Schweißpunkten wie für den ersten Arbeitsgang vorgenommen werden. Dies ist jedoch aufgrund der bereits vorhandenen Schweißraupe nicht unbedingt notwendig.

Nach der Positionierung des Schweißdrahtes gemäß Fig. 1 e) wird gemäß Fig. 1 f) eine weitere Schweißraupe 15 erzeugt, woraufhin der Spalt nunmehr vollständig verschwunden ist.

Anschließend wird die Oberfläche der Schweißraupe 15 an die benachbarten Oberflächen gemäß Fig. 1 g) angepasst. Nunmehr ist das Stahlblech einer Breite von rund 120 cm (zzgl. der Breite der gemeinsamen Schweißnähte) fertig hergestellt.

Gemäß Fig. 2 wird ein Niederhalter 16 verwendet, um den Schweißdraht 4 am Spalt (3) zwischen den beiden zur verschweißenden Blechen 1 und 2 zu fixieren. Der Draht wird bei dieser Variante nicht vorab fixiert, sondern kann durch eine Zufuhrvorrichtung vorzugsweise automatisiert von z.B. einer Rolle zugeführt werden. Der Niederhalter umfasst dabei einen Arm 17, an dessen Ende sich ein Haltelement 18 befindet. Über eine Einkerbung 19 im Halteelement, die sich in Längsrichtung zum Draht erstreckt, wird der Draht gegen den Spalt fixiert.

Über das erfindungsgemäße Verfahren können auch zur Herstellung eines Stahlbleches einer Breite von beispielsweise 1,20 m mehrere, z.B. drei rund 40 cm breite Stahlblechstreifen miteinander verbunden werden. Ebenfalls können noch breitere Stahlbleche hergestellt werden.

In einer weiteren Ausführung des Verfahrens, insbesondere bei Stahlblechen mit einer Dicke über 1 mm, werden mehr als zwei Schweißraupen unter der Verwendung von mehr als zwei Schweißdrähten bzw. Schweißdrahtabschnitten erzeugt, wobei die im Inneren der Schweißnaht liegenden Schweißraupen vorzugsweise unter Verwendung eines Schweißdrahtes mit einem Durchmesser kleiner als die mittlere Breite des Spalts erzeugt wird. Die Verwendung weiterer Schweißdrähte zur Erzeugung weiterer Schweißraupen ermöglich es, dass Spaltvolumen zwischen den Stahlblechen prozesssicher vollständig aufzufüllen und somit eine feste Verbindung der Stahlbleche zu erzeugen.

Der geringe Schweißverzug und daraus folgende geringe Nacharbeitungsaufwand ermöglichen es in einer alternativen Ausführung des Verfahrens durch die Anwendung des oben beschriebenen Schweißverfahrens Stanzbleche unmittelbar zu erstellen. Dazu werden durch Ätzen oder Gravieren bereits mit dem endgültigen Stanzmuster versehene, zum Stanzen geeignete Stahlbleche miteinander verschweißt. Dadurch können die Stanzlinien auf kleineren Flächen und damit auf kleineren Anlagen flexibel vorgefertigt werden

## Patentansprüche

1. Verfahren zur Herstellung von Stahlblechen für Stanzbleche, welche Stanzlinien insbesondere zum Stanzen von Etiketten aufweisen, **gekennzeichnet durch** Positionieren zumindest zweier über einen Spalt (3) beabstandeter Ausgangsbleche (1,2) nebeneinander, Anordnung eines Schweißdrahts (4) am Spalt (3), Verschweißen der beiden Ausgangsbleche (1,2) mittels des Schweißdrahtes (4) und einer Schweißvorrichtung, Anordnung eines weiteren Schweißdrahts (14), Verschweißen der Ausgangsbleche (1,2) mittels des weiteren Schweißdrahts (14) und Angleichen zumindest einer der Schweißraupen (8,15) an benachbarte Oberflächen des Stahlblechs, wobei das Stanzblech eine Breite von zumindest 70 cm und eine Länge von zumindest 30 cm hat.

2. Verfahren nach Anspruch 1, **dadurch gekennzeichnet, dass** der Schweißdraht (4) und/oder der weitere Schweißdraht (14) in Kontakt mit beiden Ausgangsblechen (1,2), vorzugsweise zumindest teilweise innerhalb des Spalts (3), angeordnet wird.

3. Verfahren nach Anspruch 1 oder 2, **dadurch gekennzeichnet, dass** der Schweißdraht (4) und/oder der weitere Schweißdraht (14) in Längsrichtung des Spalts (3) angeordnet wird.

4. Verfahren nach einem der vorhergehenden Ansprüche, **dadurch gekennzeichnet, dass** die Schweißvorrichtung oberhalb einer ersten Seite des Ausgangsbleche (1,2) angeordnet ist.

5. Verfahren nach einem der vorhergehenden Ansprüche, **gekennzeichnet durch** Umdrehen der miteinander verbundenen Ausgangsbleche (1,2).

6. Verfahren nach einem der vorhergehenden Ansprüche, **dadurch gekennzeichnet, dass** die Angleichung der Schweißraupen (8,15) an die Oberflächen dergestalt unmittelbar nach dem Verschweißen erfolgt, dass die Schweißraupen (8,15) eine Temperatur oberhalb der Umgebungstemperatur aufweisen.

7. Verfahren nach einem der vorherigen Ansprüche, **dadurch gekennzeichnet, dass** zur Fixierung der Ausgangsbleche (1,2) und zur Ausbildung eines gleichbleibenden Spalts (3) die Ausgangsbleche (1,2) mittels der Schweißvorrichtung und des Schweißdrahts (4,14) über eine Mehrzahl von voneinander beabstandeten Schweißstellen miteinander verbunden werden und/oder der Schweißdraht automatisiert während des Schweißvorgangs zugeführt wird.

8. Verfahren nach einem der vorherigen Ansprüche, **dadurch gekennzeichnet, dass** nach Herstellung einer ersten Schweißraupe (8) deren innerhalb des Spalts (3) liegende Schweißraupenoberfläche (11) vorbehandelt wird.

9. Verfahren nach Anspruch 8, **dadurch gekennzeichnet, dass** die Schweißraupenoberfläche (11) erhitzt wird.

10. Verfahren nach einem der vorherigen Ansprüche, **dadurch gekennzeichnet, dass** die Schweißvorrichtung einen Laser aufweist, der insbesondere gepulst betreibbar ist.

11. Verfahren nach Anspruch 10, **dadurch gekennzeichnet, dass** der Laser zur Herstellung der Schweißnaht mit einer Frequenz zwischen 1 und 20 Hz, insbesondere zwischen 3 und 7 Hz betrieben wird.

12. Verfahren nach Anspruch 10 oder 11, **dadurch gekennzeichnet, dass** der Laserstrahl in dem Bereich, in dem er auf einen der Schweißdrähte (4,14) trifft, einen Durchmesser aufweist, der maximal 0,5 mm kleiner ist als die Breite des Schweißdrahts.

13. Verfahren nach einem der vorherigen Ansprüche, **dadurch gekennzeichnet, dass** sich der Spalt (3) oberhalb eines Kühlkanals eines Arbeitstisches befindet.

14. Verfahren nach einem der vorherigen Ansprüche, **dadurch gekennzeichnet, dass** zur Fixierung und Kühlung der Ausgangsbleche eine Haltevorrichtung die Ausgangsbleche fixiert.

## Claims

1. A method for producing steel sheets for stamping plates, which have stamping lines in particular for stamping labels, **characterized by** positioning at least two output sheets (1, 2) spaced apart via a gap (3) adjacent to one another, arranging a welding wire (4) at the gap (3), welding the two output sheets (1, 2) by means of the welding wire (4) and a welding device, arranging a further welding wire (14), welding the output sheets (1, 2) by means of the further welding wire (14), and aligning at least one of the welding beads (8, 15) to adjacent surfaces of the steel sheet, wherein the stamping plates have a width of at least 70 cm and a length of at least 30 cm.

2. The method according to Claim 1, **characterized in that** the welding wire (4) and/or the further welding wire (14) is arranged in contact with both output sheets (1, 2), preferably at least partially inside the gap (3).

3. The method according to Claim 1 or 2, **characterized in that** the welding wire (4) and/or the further welding wire (14) is arranged in the longitudinal direction of the gap (3).

4. The method according to any one of the preceding claims, **characterized in that** the welding device is arranged above a first side of the output sheets (1, 2).

5. The method according to any one of the preceding claims, **characterized by** turning over the output sheets (1, 2) connected to one another.

6. The method according to any one of the preceding claims, **characterized in that** the aligning of the welding beads (8, 15) to the surfaces takes place immediately after the welding in such a way that the welding beads (8, 15) have a temperature above the ambient temperature.

7. The method according to any one of the preceding claims, **characterized in that**, to fix the output sheets (1, 2) and to form a uniform gap (3), the output sheets (1, 2) are connected to one another by means of the welding device and the welding wire (4, 14) via a plurality of welded points spaced apart from one another and/or the welding wire is supplied automatically during the welding process.

8. The method according to any one of the preceding claims, **characterized in that**, after production of a first welding bead (8), its welding bead surface (11) located inside the gap (3) is pretreated.

9. The method according to Claim 8, **characterized in that** the welding bead surface (11) is heated.

10. The method according to any one of the preceding claims, **characterized in that** the welding device has a laser, which is in particular operable in a pulsed manner.

11. The method according to Claim 10, **characterized in that** the laser for producing the weld seam is operated at a frequency between 1 and 20 Hz, in particular between 3 and 7 Hz.

12. The method according to Claim 10 or 11, **characterized in that** the laser beam has a diameter which is at most 0.5 mm smaller than the width of the welding wire in the region in which it is incident on one of the welding wires (4, 14).

13. The method according to any one of the preceding claims, **characterized in that** the gap (3) is located above a cooling duct of a worktable.

14. The method according to any one of the preceding claims, **characterized in that** a holding device fixes the output sheets for fixing and cooling the output sheets.

## Revendications

1. Procédé de fabrication de tôles en acier pour tôles à estamper, lesquelles présentent des lignes d'estampage en particulier pour l'estampage d'étiquettes, **caractérisé par** le positionnement l'une à côté de l'autre d'au moins deux tôles de départ (1, 2) espacées d'une fente (3), l'agencement d'un fil de soudage (4) au niveau de la fente (3), le soudage des deux tôles de départ (1, 2) au moyen du fil de soudage (4) et d'un dispositif de soudage, l'agencement d'un autre fil de soudage (14), le soudage des tôles de départ (1, 2) au moyen de l'autre fil de soudage (14) et l'égalisation d'au moins un des cordons de soudure (8, 15) à des surfaces adjacentes de la tôle en acier, dans lequel la tôle à estamper a une largeur d'au moins 70 cm et une longueur d'au moins 30 cm.

2. Procédé selon la revendication 1, **caractérisé en ce que** le fil de soudage (4) et/ou l'autre fil de soudage (14) est agencé en contact avec les deux tôles de départ (1, 2), de préférence au moins en partie à l'intérieur de la fente (3).

3. Procédé selon la revendication 1 ou 2, **caractérisé en ce que** le fil de soudage (4) et/ou l'autre fil de soudage (14) est agencé dans le sens longitudinal de la fente (3).

4. Procédé selon l'une quelconque des revendications précédentes, **caractérisé en ce que** le dispositif de soudage est agencé au-dessus d'un premier côté de la tôle de départ (1, 2) .

5. Procédé selon l'une quelconque des revendications précédentes, **caractérisé par** le retournement des tôles de départ (1, 2) reliées les unes aux autres.

6. Procédé selon l'une quelconque des revendications précédentes, **caractérisé en ce que** l'égalisation des cordons de soudure (8, 15) aux surfaces a lieu directement après le soudage de telle manière que les cordons de soudure (8, 15) présentent une température supérieure à la température ambiante.

7. Procédé selon l'une quelconque des revendications précédentes, **caractérisé en ce que** pour la fixation des tôles de départ (1, 2) et pour la réalisation d'une fente (3) constante, les tôles de départ (1, 2) sont reliées l'une à l'autre au moyen du dispositif de soudage et du fil de soudage (4, 14) par le biais d'une pluralité de points de soudure espacés les uns des autres et/ou le fil de soudage est amené de manière automatisée pendant l'opération de soudage.

8. Procédé selon l'une quelconque des revendications précédentes, **caractérisé en ce qu'**après la fabrication d'un premier cordon de soudure (8), sa surface de cordon de soudure (11) située à l'intérieur de la fente (3) est prétraitée.

9. Procédé selon la revendication 8, **caractérisé en ce que** la surface de cordon de soudure (11) est chauffée.

10. Procédé selon l'une quelconque des revendications précédentes, **caractérisé en ce que** le dispositif de soudage présente un laser, qui peut fonctionner en particulier de manière pulsée.

11. Procédé selon la revendication 10, **caractérisé en ce que** le laser fonctionne avec une fréquence entre 1 et 20 Hz, en particulier entre 3 et 7 Hz, pour la fabrication du joint de soudure.

12. Procédé selon la revendication 10 ou 11, **caractérisé en ce que** le faisceau laser présente dans la zone, dans laquelle il rencontre un des fils de soudage (4, 14), un diamètre qui est au maximum 0,5 mm plus petit que la largeur du fil de soudage.

13. Procédé selon l'une quelconque des revendications précédentes, **caractérisé en ce que** la fente (3) se trouve au-dessus d'un canal de refroidissement d'une table de travail.

14. Procédé selon l'une quelconque des revendications précédentes, **caractérisé en ce que** pour la fixation et le refroidissement des tôles de départ, un dispositif de retenue fixe les tôles de départ.
